# EUROPEAN PATENT SPECIFICATION

(11) **EP 2 733 808 B1**
(45) Date of publication and mention of the grant of the patent: **10.05.2017**
(21) Application number: 12460080.0
(22) Date of filing: 16.11.2012
(51) Int. Cl.: H02H 9/00, H02B 13/045, H02H 7/22

(54) **Method and system for suppressing very fast transients**
Verfahren und System zum Unterdrücken von sehr schnellen Transienten
Procédé et système pour la suppression de transitoires très rapides

(43) Date of publication of application: 21.05.2014
(73) Proprietor: ABB Schweiz AG, 5400 Baden (CH)
(72) Inventor: Szewczyk, Marcin, 03-982 Warszawa (PL); Stosur, Mariusz, 58-130 Ibramowice (PL); Piasecki, Wojciech, 30-009 Krakow (PL); Ostrogorska, Magdalena, 31-324 Krakow (PL); Riechert, Uwe, 8192 Glattfelden (CH)
(74) Representative: Chochorowska-Winiarska, Krystyna

(56) References cited:
- EP-A1- 2 339 707
- DE-A1- 4 322 944
- DE-C1- 4 142 644

## Description

The invention deals with a method and system for suppressing very fast transients in medium and high voltage switchgear.

### BACKGROUND OF THE INVENTION

During operation of electric power equipment in substations and switchgears, in the process of switching on and off, electric power equipment is exposed to very fast transients which are dangerous for the operated equipment. For example, very fast transients are generated during switching transformers on or off by means of vacuum circuit breakers. Transformers are connected with circuit breakers by means of cables of a length of a few dozen or a few hundred meters. Small surge impedance and insignificant cable loss causes that the amplitude of generated very fast transients magnified by surge reflection can significantly exceed the rated value of the supply voltage, and the frequency of these transients can range from a few hundred kHz to as much as a few MHz. Then, very fast transients can damage the insulation of equipment connected to the switchgear, and especially transformers, motors and cables.

In high voltage gas insulated switchgear (GIS), the main source of transients are switching actions, especially during operations of opening or closing a disconnector. Disconnectors normally used as isolating switches are adapted to performing switching actions in no-load conditions, that is without flow of working current. However, even in such conditions, opening of disconnector contacts in a GIS switchgear is accompanied by switching off of capacity currents connected with a charge accumulated on the capacitances of the internal elements of the switchgear. The value of this current is relatively small and it does not exceed a few hundred milliamperes for a GIS substation. However, due to slow motion of disconnector contacts relative to changes in grid voltage, the intercontact break is exposed to the occurrence of multiple ignitions which in turn are connected with the occurrence of Very Fast Transients (VFT).

VFT of frequencies in the range 100 kHz ÷ 50 MHz propagate in the form of electromagnetic waves along busbars and substation equipment. Multiple reflections and passages of electromagnetic wave through elements of different surge impedance or through different points of discontinuity of the system, such as e.g. an open disconnector or circuit breaker, additionally reinforce the arising transients. A characteristic feature of wave propagation in gas insulated systems is small intrinsic suppression. That is why suppression of very fast transients has to be realized by means of special equipment.

In patent application DE4322944 there is described a device allowing to suppress very fast transients in gas insulated switchgear. This is done by means of a current transformer in whose enclosure there is embedded a high-frequency capacitor which is an element of a shunted circuit for transients occurring during switching operations of a disconnector. An inconvenience of this solution is the necessity to interfere in the construction of a standard current transformer.

In another solution known from patent application CN1258923, suppression of very fast transients is realized by using ferromagnetic rings put directly on the GIS busbar. An inconvenience of this solution is a reduction in the insulating distance between the inner part of the switchgear enclosure and the live element, i.e. the busbar with installed magnetic rings. The application of this solution requires interference in the construction of the switchgear.

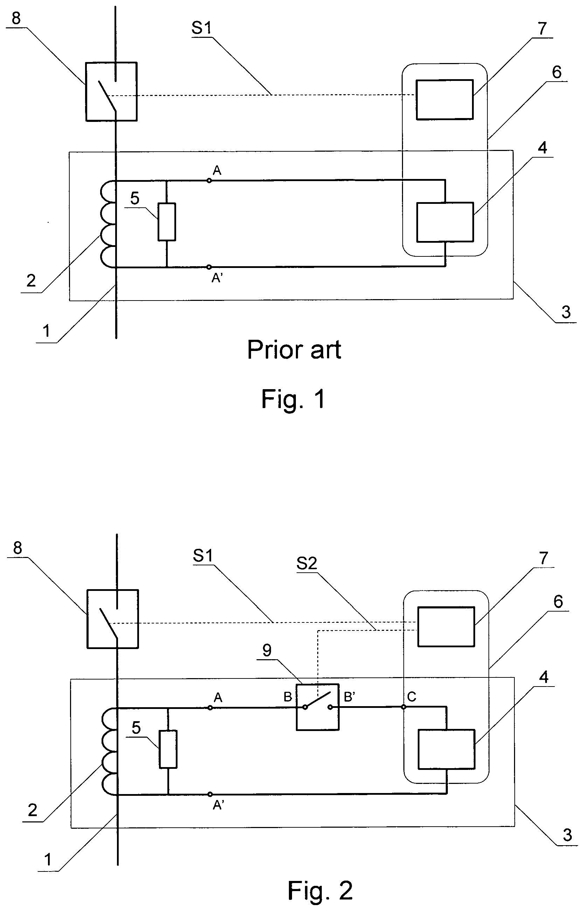

Medium and high voltage switchgears typically comprise current transformers for measuring current in the main current paths. Fig. 1 shows a measuring system known from the state of the art and used in medium and high voltage switchgears. A current transformer whose primary winding 1 is formed by the main busbar of a switchgear usually contains a few secondary windings of different applications. Some secondary windings are a part of protection circuits, while others are a part of measuring circuits. Magnetic coupling of the primary winding 1 and of any secondary winding is realized by the toroidal magnetic core of the current transformer, nor shown in the drawing. The magnetic core is made of a material of a broad-band frequency characteristic, e.g. of nanocrystalline or amorphous tape. One of the secondary windings, secondary winding 2, is an element of a measuring circuit 3. The secondary winding 2 is connected with a measuring module 4 through terminals A, A'. The measuring module 4 is suitable for current measurements, therefore it has a small input impedance of a value close to zero. In the measuring circuit 3 there is an equivalent resistance 5 of the losses of the toroidal magnetic core. The equivalent resistance 5 is found in the measuring circuit 3 parallel to the measuring module 4. The measuring module 4 is usually one of the modules of a protection relay 6. The protection relay 6 contains various modules including a control module 7. The control module 7 controls the opening/closing of a switching device 8 by means of a control signal S 1. The switching device 8 is connected in series to the main current path of the switchgear, comprising the primary winding 1. In a high voltage gas-insulated switchgear, the switching device is a disconnector, and in a medium voltage switchgear the switching device is a circuit breaker.

### SUMMARY OF THE INVENTION

The invention is concerned with a method according to claim 1 and a system according to claim 5. According to the invention, before sending a control signal to the switching device, a control signal is sent to the switching-over module which disconnects the measuring module from the measuring circuit. Next, after disconnecting the measuring module, a control signal is sent to the switching device and the opening/closing process is carried out. At the moment of opening/closing the switching device, a signal is again sent from the control module to the switching-over module and again the measuring module is connected to the measuring circuit. The suppressing function of the measuring circuit is realized through a suppressing circuit formed of the secondary winding of the current transformer and the equivalent resistance of nanocrystalline or amorphous core losses.

Preferably, the suppressing function of the measuring circuit is realized through a suppressing circuit formed of the secondary winding of the current transformer, the equivalent resistance of nanocrystalline or amorphous core losses, and a suppressing module connected parallel into the measuring circuit.

Preferably, the start of the process of opening/closing the switching device takes place at least 1 ms later than the disconnection/connection of the measuring circuit.

Preferably, the suppressing module is connected into the measuring circuit parallel between the secondary winding and the measuring module.

Preferably, the suppressing module has the form of a low-inductive resistor.

Preferably, the switching-over module has the form of an electromechanical relay. Preferably, the switching device is a device in the form of a disconnector of a high voltage gas-insulated switchgear.

Preferably, the switching device is a device in the form of a circuit breaker of a medium voltage switchgear.

The advantage of the system according to the invention is the achievement of the effect of suppression of very fast transients without interference in the main components of the medium or high voltage switchgear, in particular in the construction of the main current path of the switchgear. The application of the system according to the invention does not require installation of any additional elements inside the switchgear enclosure, in particular, for gas-insulated switchgear, it does not require interference in the chambers containing insulating gas.

### BRIEF DESCRIPTION OF THE DRAWINGS

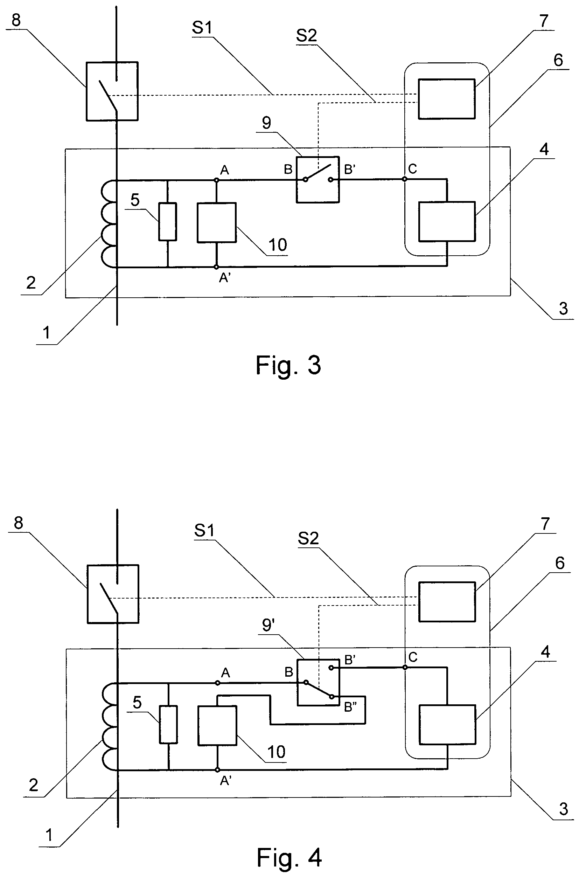

The system according to the invention is explained on its embodiment and on the drawing where fig. 1 shows the equivalent circuit diagram of a measuring system known in the art, fig. 2 shows the equivalent circuit diagram of a suppressing system in the first embodiment of the invention, fig. 3 shows the equivalent circuit diagram of a suppressing system in the second embodiment of the invention, fig. 4 shows the equivalent circuit diagram of a suppressing system in the third embodiment of the invention:

### DETAILED DESCRIPTION OF THE INVENTION

The method and system according to the invention is realized using standard equipment of medium and high voltage switchgears, in particular using a known measuring circuit 3, which is shown in fig. 1.

The method according to the invention is realized by means of the system shown in the drawing in three embodiments in which periodically, that is before opening/closing the switching device 8, the measuring function of the measuring circuit 3 is changed into the suppressing function.

The process of opening/closing a switching device 8 is initiated by a control module 7 by means of a control signal S 1. Sending the control signal S1 from the control module 7 to the switching device 8 is preceded be sending a control signal S2 from the control module 7 to the switching-over module 9, 9', by means of which a measuring module 4 is disconnected from the measuring circuit 3, which activates a suppressing function in the measuring circuit 3 of the switchgear. Only when the suppressing function has been activated, the control module 7 sends the signal S1 to the disconnector 8 thus initiating the process of opening/closing the switching device 8. The signal S2 is sent at least 1 ms before sending the signal S1. Next, after completing the process of opening/closing the switching device 8, the control module 7 again sends the control signal S2 to the switching-over module 9, 9' causing a renewed connection of the measuring module 4 to the measuring circuit, thus causing deactivation of the suppressing function of the measuring circuit 3.

In the first embodiment of the invention, the system for suppressing very fast transients applied in a medium or high voltage switchgear incorporates a switching-over module 9 connected in-series to a measuring circuit 3, between terminal A, which is one of the terminals of the secondary winding, and terminal C which is one of the terminals of the measuring module 4. The operation of the switching-over module 9 is controlled by a control module 7 through a control signal S2. The switching-over module 9 has the form of a known electromechanical relay activated automatically by the control signal S2. The switching-over module 9 is in one of the two states: "open" or "closed". If the switching-over module 9 is in the "open" state, then the measuring circuit 3 is interrupted and then the secondary winding 2 together with the equivalent resistance 5 form a suppressing circuit. If the switching-over module 9 is in the "closed" state, then the measuring circuit 3 is closed and due to the fact that the input impedance of the measuring module 4 is in practice several orders of magnitude less than the equivalent resistance 5, current that flows through the equivalent resistance 5 has a negligibly small value, and therefore the role of the equivalent resistance 5 in the measuring circuit 3 is negligible.

In the second embodiment of the invention, the system for suppressing very fast transients incorporates the switching-over module 9 connected to the measuring circuit 3 and a suppressing module 10. The switching-over module 9 has the form of a known electromechanical relay activated automatically by a control signal. The suppressing module 10 contains a low-inductive resistor connected in series between the input terminals of the suppressing module 10. The switching-over module 9 is connected in series to the measuring circuit 3, between a terminal A which is one of the terminals of the secondary winding and a terminal C which is one of the terminals of the measuring module 4. The suppressing module 10 is connected between terminals A and A' of the secondary winding 2, parallel in relation to the measuring module 4. Operation of the switching-over module 9 is controlled by the control module 7 through a control signal S2. The switching-over module 9 is in one of the two states: "open" or "closed". If the switching-over module is in the "open" state, then the measuring circuit 3. is interrupted and then the secondary winding 2 together with the equivalent resistance 5 and the suppressing module 10 form the suppressing circuit. If the switching-over module 9 is in the "closed" state, then the measuring circuit 3 is closed, and due to the fact that the input impedance of the measuring module 4 is in practice a few orders of magnitude less than the resultant equivalent resistance 5 and the resistance of the suppressing module, practically all current flows through the measuring module 4, therefore the role of the equivalent resistance 5 and of the suppressing module 10 is negligible.

In the third embodiment of the invention, the system for suppressing very fast transients incorporates a switching-over module 9' connected to the measuring circuit 3 and the suppressing module 10. The switching-over module 9' has the form of a known electromechanical relay activated automatically by a control signal. The suppressing module 10 contains a low-inductive resistor connected in series between the input terminals of the suppressing module 10. The switching-over module 9' has one input terminal B and two output terminals B' and B". In the switching-over module 9', depending on the setting, the input terminal B is connected with an output terminal B' or the input terminal B is connected with an output terminal B". The switching-over module 9' is connected through the terminal B on the side of the terminal A which is one of the terminals of the secondary winding 2, and through the terminal B' on the side of the terminal C which is one of the terminals of the measuring module 4. The suppressing module 10 is connected between the terminals B" and A'. The setting of the switching-over module 9' is controlled by the control module 7 through a control signal S2. The switching-over module 9' is in one of the two states: connection B-B' or connection B-B".If the switching-over module 9' is in the state B-B", then the measuring circuit 3 is interrupted and at the same time the suppressing circuit formed by the secondary winding 2, the equivalent resistance 5 and the suppressing module 10 is closed. If the switching-over module 9' is in the state B-B', then the measuring circuit 3 is closed and at the same time the suppressing module 10 is disconnected.

## Claims

1. A method for suppressing very fast transients in medium and high voltage switchgear during opening/closing a switching device (8) of a switchgear, wherein said switching device (8) is controlled by a control signal S1 sent from a control module (7) connected to the switchgear, which switchgear has a measuring circuit (3) comprising a measuring module (4) and a secondary winding (2), wherein said secondary winding (2) is a part of a current transformer, which current transformer comprises a nanocrystalline or amorphous core having an equivalent resistance (5) and is equipped with a primary winding (1), which primary winding is connected in series with the switching device (8) of the switchgear, **characterized in that** the measuring function of the measuring circuit (3) is periodically changed into the function of a suppressor of very fast transients by connection into the measuring circuit (3) a switching-over module (9, 9') in-series between a terminal (A) of the secondary winding (2) and a terminal (C) of the measuring module (4) and by controlling said switching-over module (9, 9') by a control signal S2 sent from the control module (7).

2. A method according to claim 1, **characterized in that** before sending a control signal S1 to the switching device (8) a control signal S2 is sent to the switching-over module (9, 9'), which switching-over module (9, 9') disconnects the measuring module (4) in the measuring circuit (3) from the secondary winding (2), and next, after disconnecting the measuring module (4), the control signal S1 is sent to the switching device (8) and the opening/closing process is carried out, and at the moment of opening/closing the switching device (8) a signal S2 is again sent from the control module (7) to the switching-over module (9, 9') and again the measuring module (4) is connected to the measuring circuit (3).

3. A method according to claim 1 or 2, **characterized in that** the suppressing function of the measuring circuit (3) is realized by a suppressing circuit formed by the secondary winding (2) and a suppressing module (10) which is connected in parallel into the measuring circuit (3) between the terminals (A, A') of the secondary winding (2).

4. A method according to claim 1 or 2, **characterized in that** the process of opening/closing the switching device (8) starts at least 1 ms later than the disconnection of the measuring module (4).

5. A system for suppressing very fast transients in medium and high voltage switchgear during opening/closing a switching device (8) of a switchgear, the system comprising at least a control module (7) and a switchgear comprising the switching device (8), wherein said switching device (8) is configured to be controlled by a control signal S1 sent from the control module (7) connected to the switchgear, which switchgear has further a measuring circuit (3) comprising a measuring module (4) and a secondary winding (2), wherein said secondary winding (2) is a part of a current transformer, which current transformer comprises a nanocrystalline or amorphous core having an equivalent resistance (5) and is equipped with a primary winding (1), which primary winding is connected in series with the switching device (8) of the switchgear, **characterized in that** a switching-over module (9, 9') is connected in-series between a terminal (A) of the secondary winding (2) and a terminal (C) of the measuring module (4) and is adapted to be controlled by a control signal S2 sent from the control module (7) in accordance with the method of claims 1-4.

6. A system according to claim 5 **characterized in that** a suppressing module (10) is additionally connected into the measuring circuit (3) in parallel between the terminals (A, A') of the secondary winding (2).

7. A system according to claim 6 **characterized in that** the suppressing module (10) is a low-inductive resistor.

8. A system according to claim 5 **characterized in that** the switching-over module (9 or 9') is an electromechanical relay.

## Patentansprüche

1. Methode zur Unterdrückung schnellwechselnder vorübergehender Überspannungen in Hoch- und Mittelspannungsschaltanlagen während des Öffnens/Schließens der Schaltvorrichtung (8) der Schaltanlage, wobei die o.g. Schaltanlage (8) mittels eines S1-Steuersignals des an die Schaltanlage angeschlossenen Steuersystems (7) gesteuert wird und die Schaltanlage über einen Messschaltkreis (3) mit einem Messmodul (4) und einer Sekundärwicklung (2) ausgerüstet ist; die Sekundärwicklung (2) ist Teil eines Stromwandlers mit nanokristallinen oder amorphen Kernen mit Ersatzwiderstand (5), wobei die Primärwicklung (1) des Stromwandlers in einer Reihe mit der Schaltvorrichtung (8) der Schaltanlage geschaltet ist; **dadurch gekennzeichnet, dass** die Messfunktion des Messschaltkreises (3) zeitweise in eine Funktion zur Unterdrückung von schnellwechselnden vorübergehenden Überspannungen wechselt, indem das Umschaltmodul (9, 9') in einer Reihe in den Messschaltkreis (3) zwischen Klemme (A) der Sekundärwicklung und Klemme (C) des Messmoduls (4) geschaltet wird, und indem das o.g. Umschaltmodul (9, 9') mittels des Steuersignals S des Steuermoduls (7) gesteuert wird.

2. Methode nach Anspruch 1, **dadurch gekennzeichnet, dass** vor dem Senden von Steuersignal S1 an die Schaltvorrichtung (8) das Steuersignal S2 an das Umschaltmodul (9, 9') gesendet wird, wobei dieses Umschaltmodul (9, 9') das Messmodul (4) im Messkreis (3) von der Sekundärwicklung (2) trennt, und anschließend nach dem Abtrennen des Messmoduls (4) das Steuersignal S1 an die Schaltvorrichtung (8) gesendet wird und das Öffnen/Schließen erfolgt; zum Zeitpunkt des Öffnens/Schließens der Schaltvorrichtung (8) wird vom Steuermodul (7) erneut Signal S2 an das Umschaltmodul (9, 9') gesendet und das Messmodul (4) wird erneut an den Messschaltkreis (3) angeschlossen.

3. Methode nach Anspruch 1 oder 2, **dadurch gekennzeichnet, dass** die Funktion zur Unterdrückung des Messschaltkreises (3) über einen Unterdrückungsschaltkreis erfolgt, der aus der Sekundärwicklung (2) und dem Unterdrückungsmodul (10) besteht, welches parallel zum Messschaltkreis (3) zwischen die Klemmen (A, A') der Sekundärwicklung (2) geschaltet wird.

4. Methode nach Anspruch 1 oder 2, **dadurch gekennzeichnet, dass** das Öffnen/Schließen der Schaltvorrichtung (8) mindestens 1 ms nach der Trennung des Messmoduls (4) beginnt.

5. Unterdrückungssystem für schnellwechselnde vorübergehende Überspannungen in Mittel- oder Hochspannungsanlagen während des Öffnens/Schließens der Schaltvorrichtung (8) der Schaltanlage, mit mindestens einem Steuermodul (7) und einer Schaltanlage mit einer Schaltvorrichtung (8), die zwecks Steuerung über das Steuersignal S1 konfiguriert wird, welches vom an die Schaltanlage angeschlossenen Steuermodul (7) aus gesendet wird; die Schaltanlage ist außerdem mit einem Messschaltkreis (3) ausgestattet, der ein Messmodul (4) und eine Sekundärwicklung (2) umfasst, wobei die Sekundärwicklung (2) Teil des Stromwandlers mit nanokristallinen oder amorphen Kernen mit Ersatzwiderstand (5) ist und die Primärwicklung (1) des Stromwandlers in einer Reihe mit der Schaltvorrichtung (8) der Schaltanlage geschaltet ist; **dadurch gekennzeichnet, dass** das Umschaltmodul (9, 9')in eine Reiher zwischen Klemme (A) der Sekundärwicklung (2) und Klemme (C) des Schaltmoduls (4) geschaltet und über ein vom Steuermodul (7) nach Maßgabe der Methode in Anspruch 1-4 versendetes Steuersignal S2 zur Steuerung vorgesehen ist.

6. System nach Anspruch 5, **dadurch gekennzeichnet, dass** das Unterdrückungsmodul (10) zusätzlich parallel zwischen den Klemmen (A, A') der Sekundärwicklung (2) an den Messschaltkreis (3) angeschlossen ist.

7. System nach Anspruch 6, **dadurch gekennzeichnet, dass** als Unterdrückungsmodul (10) ein induktionsarmer Widerstand dient.

8. System nach Anspruch 5, **dadurch gekennzeichnet, dass** als Umschaltmodul (9 oder 9') ein elektromechanisches Relais dient.

## Revendications

1. Procédé et méthode pour la suppression de transitoire très rapide dans le tableau de branchement de moyenne et haute tension durant l'ouverture / fermeture du dispositif de connexion (8) du tableau de branchement, où ledit dispositif de connexion (8) est contrôlé par le signal de contrôle S1 émis du module de contrôle (7) connecté au tableau de branchement, et le tableau de branchement possède un circuit de mesure (3) comportant un module de mesure (4) et un circuit secondaire (2), et ce circuit secondaire (2) fait partie du transformateur de courant ayant des noyaux nanocristallin et amorphe de résistance équivalente (5), étant entendu que le circuit primaire (1) du transformateur de courant est connecté en série au dispositif de connexion (8) du tableau de branchement, **caractérisés en ce que** la fonction de mesure du circuit de mesure (3) est périodiquement changée en la fonction de suppression de transitoire très rapide moyennant le raccordement en série d'un module de commutation (9, 9') au circuit de mesure (3) entre la borne (A) du circuit secondaire (2) et la borne (C) du module de mesure (4) ainsi que par le fait d'effectuer le contrôle par le module de commutation (9, 9') à l'aide du signal de contrôle S2 émis du module de contrôle (7).

2. La méthode selon la revendication 1, **caractérisé en ce que,** avant d'émettre le signal de contrôle S1 au dispositif de connexion (8), le signal de contrôle S2 est émis au module do commutation (9, 9') et que ledit module de commutation (9, 9') déconnecte du circuit secondaire (2) le module de mesure (4) dans le circuit de mesure (3), et en deuxième lieu, après la déconnexion du module de mesure (4), le signal de contrôle S1 est émis au dispositif de connexion (8) et le processus d'ouverture / fermeture est effectué, étant entendu qu'au moment d'ouverture / fermeture du dispositif de connexion (8) le signal S2 est de nouveau émis du module de contrôle (7) au module de commutation (9, 9') et le module de mesure (4) est de nouveau connecté au circuit de mesure (3).

3. La méthode selon la revendication 1 ou 2, **caractérisé en ce que** la fonction de suppression du circuit de mesure (3) est réalisée par l'intermédiaire du circuit de suppression formé d'un circuit secondaire (2) et d'un module de suppression (10) raccordé en série au circuit de mesure (3), entre les bornes (A, A') du circuit secondaire (2).

4. La méthode selon la revendication 1, **caractérisé en ce que** le processus de fermeture / ouverture du dispositif de connexion (8) commence au moins 1 ms plus tard que la déconnexion du module de mesure (4).

5. Le système pour la suppression de transitoire très rapide dans le tableau de branchement de moyenne et haute tension durant l'ouverture / fermeture du dispositif de connexion (8) du tableau de branchement comprenant au moins un module de contrôle (7) et un tableau de branchement comportant un dispositif de connexion (8) et que ledit dispositif de connexion est configuré afin d'être contrôlé par le signal de contrôle S1 émis du module de contrôle (7) raccordé au tableau de branchement lequel tableau de branchement est en outre équipé d'un circuit de mesure (3) comportant un module de mesure (4) et un circuit secondaire (2), ledit circuit secondaire (2) faisant partie du transformateur de courant ayant des noyaux nanocristallins et amorphes de résistance équivalente (5), étant entendu que le circuit primaire (1) du transformateur de courant est connecté en série au dispositif de connexion (8) du tableau de branchement, **caractérisés en ce que** le module de commutation (9, 9') est raccordé en série entre la borne (A) du circuit secondaire (2) et la borne (C) du module de mesure (4) et est adapté à être contrôlé par intermédiaire du signal de contrôle S2 émis du module de contrôle (7) conformément à la méthode selon les revendications 1 à 4.

6. Le système selon la revendication 5, **caractérisé en ce que** le module de suppression (10) est en plus raccordé en parallèle au circuit de mesure (3) entre les bornes (A, A') du circuit secondaire (2).

7. Le système selon la revendication 6, **caractérisé en ce que** le module de suppression (10) est une résistance de basse induction.

8. Le système selon la revendication 5, **caractérisé en ce que** le module de commutation (9 ou 9') est un relais électromécanique.
